# EUROPÄISCHE PATENTSCHRIFT

(11) **EP 2 099 650 B1**
(45) Veröffentlichungstag und Bekanntmachung des Hinweises auf die Patenterteilung: **11.06.2014**
(21) Anmeldenummer: 07818497.5
(22) Anmeldetag: 27.09.2007
(51) Int. Cl.: B60R 13/08

(54) **Verfahren zum Abstimmen eines schalldämmenden Hitzeschilds**
Method for adjusting a heat shield
Procédé d'adaptation d'un bouclier thermique

(30) Priorität: 14.12.2006 DE 102006058988
(43) Veröffentlichungstag der Anmeldung: 16.09.2009
(73) Patentinhaber: ElringKlinger AG, 72581 Dettingen (DE)
(72) Erfinder: ZIKA-BEYERLEIN, Beate, 90482 Nürnberg (DE)
(74) Vertreter: nospat Patent- und Rechtsanwälte GbR
(86) Internationale Anmeldenummer: PCT/EP2007/008414
(87) Internationale Veröffentlichungsnummer: WO 2008/071247

(56) Entgegenhaltungen:
- EP-A- 0 315 169
- EP-A- 0 903 415
- EP-A1- 1 306 145
- WO-A-01/49372
- CA-A1- 2 416 346
- DE-A1- 2 215 898
- DE-A1- 2 750 457
- DE-A1- 4 001 409
- DE-A1- 4 307 818
- DE-A1- 4 424 104
- DE-A1- 4 426 097
- DE-A1-102004 056 294
- DE-C1- 19 723 943
- JP-A- 9 111 907

## Beschreibung

Die Erfindung betrifft ein Verfahren zum Abstimmen eines schalldämmenden Hitzeschilds. Mehrlagige Hitzeschilde sind in unterschiedlichsten Ausführungsformen bekannt und finden insbesondere in der Kraftfahrzeugtechnik weitverbreitete Anwendung. Als Hitzeschild konzipiert, haben solche Bauteile die Aufgabe, die durch Strahlung und/oder Konvektion abgegebene Wärme von Motoren und deren Komponenten, wie Turbolader, Katalysatoren etc., abzuhalten.

Als Hitzeschild müssen die Schirmlagen hinsichtlich ihrer Werkstoffeigenschaften und ihrer Dimensionierung so ausgelegt sein, dass sie den beim Betrieb auftretenden Extremwerten der thermischen Belastung gewachsen sind. Dies führt bei den bekannten Lösungen zu einer aufwendigen und kostenintensiven Bauweise, weil keine Möglichkeit gegeben ist, im Betrieb die auftretende Temperatur direkt am Hitzeschildmaterial aktiv zu beeinflussen. Die Wärmedämmwirkung bekannter Lösungen ist auch nicht zufriedenstellend, selbst wenn im Hohlraum zwischen den Schirmlagen als Isolierlage ein wärmedämmendes Material, beispielsweise Quarzsand oder ein ähnlicher mineralischer Füllstoff, eingebaut ist, was in nachteiliger Weise auch zu einer Erhöhung des Baugewichtes führt. Vergleichbare Lösungen zeigt auch die DE 102 53 508 B3, die als Isolierlage zwischen als Decklagen ausgebildeten Blechplatinen hoch dispergierte Kieselsäure einsetzt, die wie Quarzsand inkompressibel ist.

Aus der DE 27 50 457 A1 ist eine thermische Isolationsstruktur bekannt, bei der eine thermisch abgedichtete Kammer ein Gas geringer Leitfähigkeit und ein teilchenförmiges Material geringer Dichte enthält.

Im Hinblick auf den Stand der Technik stellt sich die Erfindung die Aufgabe, ein Verfahren zum Abstimmen eines schalldämmenden Hitzeschilds zur Verfügung zu stellen, so dass eine einfache Bauweise ermöglicht ist und der Hitzeschild den im Betrieb zu stellenden Anforderungen, in besonderem Maße gerecht wird.

Erfindungsgemäß ist diese Aufgabe durch ein Verfahren gelöst, das die Merkmale des Patentanspruches 1 in seiner Gesamtheit aufweist. Vorteilhafte Ausführungsformen sind in den Ansprüchen 2 bis 12 angegeben.

Danach besteht die wesentliche Besonderheit der Erfindung unter anderem darin, dass der zwischen Schirmlagen jeweils gebildete Hohlraum mit mindestens einem Fluid-Medium, vorzugsweise in Gasform, befüllt wird und dass der Mediendruck vom Umgebungsdruck abweicht. Durch die Wahl der Druckdifferenz, insbesondere der Höhe eines im Inneren des Hohlraumes herrschenden Überdruckes, läßt sich in den vorzugsweise durch Stahlblechplatinen gebildeten Schirmlagen eine definierte vorgebbare Spannung erzeugen. Im Hinblick darauf, dass abzuschirmende Wärmequellen üblicherweise auch Schallquellen sind und Hitzeschilde demzufolge schalldämmend wirken sollen, läßt sich die durch die Druckdifferenz erzeugte Spannung der als Schirmlagen dienenden Blechplatinen vorzugsweise so wählen, dass die Schwingungs-Eigenfrequenz der Schirmlagen außerhalb des Resonanzbereichs der Schallfrequenz der Schallquelle gelegen ist, so dass sich insoweit eine wirksame Schalldämmung ergibt. Der schalldämmende Hitzeschild wird also z. B. auf eine wärme- und schallabgebende Komponente eines Kraftfahrzeuges abgestimmt. Vorzugsweise ist ferner vorgesehen, dass das jeweils einzubringende Fluid-Medium eine geringe Leitfähigkeit aufweist, und die Benutzung eines schlecht wärmeleitenden Mediums, vorzugsweise in Form eines Gases als Wärmeisolierelement, stellt insoweit nicht nur eine besonders einfache und kostengünstige Lösung dar, sondern ermöglicht auch eine außerordentlich starke Wärmedämmung aufgrund der angesprochenen geringen Wärmeleitfähigkeit, was insbesondere für den Fall gilt, wenn als Fluid-Medium ein Gas eingesetzt ist.

Ferner ist es vorteilhaft, nicht nur den Druck des gasförmigen Mediums sondern auch die Art des dahingehenden Mediums im Hinblick auf eine eine Schalldämmung bewirkende Eigenschaft auszuwählen. Wenn bei einem Abschirmbauteil der Schwerpunkt der Dämmwirkung weniger den Aspekt der Wärmedämmung als den Aspekt der Schalldämmung betrifft, kann als gasförmiges Medium beispielsweise Helium vorgesehen sein, das sich zwar nicht durch eine besonders niedrige Wärmeleitfähigkeit auszeichnet, jedoch in äußerst hohem Maße schallisolierend wirkt.

Wenn jedoch der Schwerpunkt der Anforderungen auf dem Gebiet der Wärmedämmung liegt, können mit besonderem Vorteil Gase wie Argon, Kohlenstoffdioxid, Stickstoff oder Luft vorgesehen sein.

Zusätzlich zur Gasfüllung kann im Hohlraum eine zusätzliche Füllung aus einem Material mit offenzelliger Struktur vorhanden sein, wodurch eine weitere Verbesserung der schalldämmenden Wirkung ermöglicht wird.

Nachstehend ist die Erfindung anhand von in der Zeichnung dargestellten Ausführungsbeispielen im Einzelnen erläutert. Es zeigen:
Fig. 1 eine Draufsicht auf die von einer Wärmequelle abgewandte Seite eines Ausführungsbeispiels des schalldämmenden Hitzeschilds;
Fig. 2 einen abgebrochen gezeichneten Teillängsschnitt wie in Fig. 1 mit der Schnittlinie K-I1 angegeben und
Fig. 3 einen der Fig. 2 entsprechenden Teillängsschnitt eines zweiten Ausführungsbeispieles.

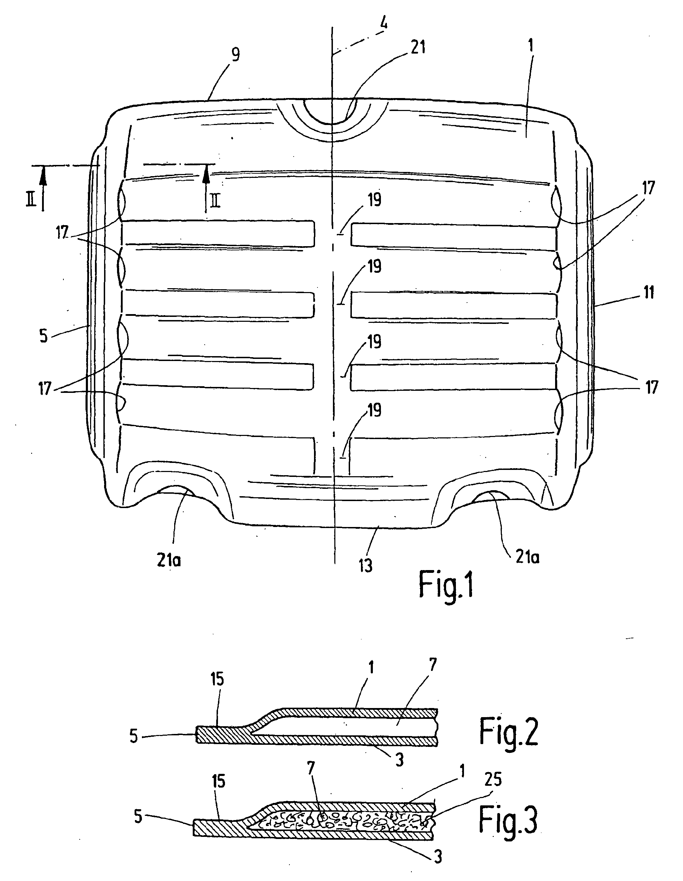

In der Zeichnung ist die Erfindung anhand von Ausführungsbeispielen erläutert. Die Fig. 1 zeigt die Außenseite des Hitzeschilds, die bei der Einbauposition von der betreffenden Hitzequelle abgewandt ist. Diese Außenseite ist durch eine erste Schirmlage 1 aus einem Edelstahlblech mit einem im großen Ganzen rechteckförmigen Umriss gebildet, in einer zu einer zentralen Längsachse 4 symmetrischen Gestalt. Bei den vorliegenden Ausführungsbeispielen ist der Hitzeschild zweilagig. Die zweite Schirmlage 3, die die der Hitzequelle zugewandte Innenseite des Hitzeschilds bildet, ist lediglich in den Detailschnitten der Fig. 2 und 3 sichtbar.

In Fig. 2 und 3 ist jeweils ein an einen Seitenrand 5 der Schirmlagen 1 und 3 angrenzender Abschnitt sichtbar. Wie gezeigt, bildet die innere Schirmlage 3 eine im Wesentlichen ebene Abschirmfläche, während die vordere Schirmlage 1 aus der Abschirmfläche leicht gewölbt nach außen verläuft, sodass zwischen äußerer, erster Schirmlage 1 und innerer, zweiter Schirmlage 3 ein Hohlraum 7 vorhanden ist, siehe Fig. 2. An dem in Fig. 2 und 3 sichtbaren Seitenrand 5 - dies gilt in entsprechender Weise auch für die übrigen Seitenränder 9, 11 und 13 - sind die beiden Schirmlagen 1 und 3 unter Ausbildung einer nahtlosen Übergangsstelle 15, die einer Schweißstelle vergleichbar ist, verbunden. Diese Verbindung kann durch einen Pressvorgang, der den Werkstoff bis zur Fließgrenze umformt, hergestellt werden. Alternativ könnte an den Seitenrändern ein üblicher Schweißvorgang stattfinden oder eine Umbördelung vorgenommen werden. Die Verbindung durch Kalt- oder Warmumformung ist jedoch fertigungstechnisch vorteilhafter und zeichnet sich gegenüber einer Umbördelung durch absolute Dichtheit aus.

Vor dem Verbinden der Schirmlagen 1 und 3 längs der Seitenränder 5, 9, 1 1, 13 erfolgt an der äußeren Schirmlage 1 eine Formgebung zur Bildung der in Fig. 2 gezeigten Auswölbung aus der Abschirmfläche. Wie die Draufsicht von Fig. 1 zeigt, werden bei dieser Formgebung aus der gewölbten Mantelfläche leicht vorstehend geformte wulstartige Wölbungen 17 gebildet, die über erhabene Verbindungsstege 19 miteinander verbunden sind. Diese Strukturierung bildet eine Art Verstärkungsrippen für die äußere Schirmlage 1.

Nach dem Verbinden der Schirmlagen 1 und 3 an den gasdichten Übergangsstellen 15 erfolgt ein Aufweiten des Hohlraumes 7 mittels Druckluft, die in den Hohlraum 7 über eine in Fig. 1 lediglich schematisiert angedeutete Gaseintrittsöffnung 21 zugeführt wird. Nachdem der Hohlraum 7 auf das gewünschte Volumen aufgeweitet ist, erfolgt über die Eintrittsöffnung 21 ein Befüllen des Hohlraumes 7 mit einem Gas geringer Wärmeleitfähigkeit, etwa mit Argon, Kohlenstoffdioxid oder Stickstoff. Dadurch wird die Wärmedämmwirkung des Bauteils außerordentlich stark verbessert. Das Befüllen wird in der Weise ausgeführt, dass zwischen Hohlraum 7 und Umgebung eine definierte Druckdifferenz gegeben ist, insbesondere ein innerer Überdruck vorhanden ist. Dessen Höhe kann so gewählt werden, dass sich in den Schirmlagen 1 und 3 eine definierte Spannung ergibt, die Schwingungen der Schirmlagen 1 und 3 und damit eine Schallerzeugung der Schirmlagen 1 und 3 unterbindet. Genauer gesagt kann die Spannung so gewählt werden, dass sich für die Schirmlagen 1 und 3 eine Eigenfrequenz ergibt, bei der keine Resonanz bei gegebener Anregungsfrequenz auftritt. Neben der guten Wärmedämmung ist somit auch eine besonders gute schalldämmende Wirkung erreichbar. In Anwendungsfällen, **wo** die Schalldämmung vorrangiges Ziel ist, kann der Hohlraum 7 auch mit einem Gas befüllt werden, das, wie Helium, eine hervorragende Schalldämmung bewirkt, jedoch hinsichtlich der Wärmedämmung nicht optimal ist.

Fig. 3 zeigt ein zweites Ausführungsbeispiel, bei dem im Hohlraum 7 zusätzlich eine Füllung 25 enthalten ist, die zwischen die Schirmlagen 1 und 3 eingelegt ist, bevor die Verbindung an den Seitenrändern erfolgt. Bei der Füllung 25 handelt es sich um ein Material mit offenzelliger Struktur, so dass Poren oder Freiräume vorhanden sind, die durch das Füllgas ausgefüllt sind. Durch eine derartige Füllung 25 ergibt sich sowohl eine Verbesserung der Wärmedämmung als auch eine Verbesserung der Schalldämmung.

Bei der Herstellung kann auch so vorgegangen werden, dass das Aufweiten des Hohlraumes 7 anstatt durch Druckluft bereits mit dem betreffenden Gas durchgeführt wird, das hinsichtlich der Wärmeleitfähigkeit als Füllgas ausgewählt ist, so dass die Schritte des Aufweitens und des Füllens mit dem ausgewählten Gas kombiniert sind. In Anbetracht der verhältnismäßig schlechten Wärmeleitfähigkeit von Luft kann hierbei auch so vorgegangen werden, dass die zum Aufweiten benutzte Druckluft als wärmedämmendes Medium im Hohlraum 7 eingeschlossen wird.

Durch die genannte Füllung 25, beispielsweise in Form eines offenporigen einzuspritzenden Metallschaumes über die Eintrittsöffnung 21, läßt sich auch die für eine Aufweitung des Hohlraumes 7 benötigte einzubringende Gasmenge reduzieren, was Herstellkosten senken hilft, insbesondere wenn das einzubringende Gas, in der Art eines Edelgases, entsprechend teuer in der Beschaffung ist. Insoweit liegt es auch noch im Bereich der Erfindung den Hohlraum 7 in voneinander abgetrennte, nicht näher dargestellte Teilkammern zu unterteilen, wobei vorzugsweise die Aufteilung in Teilkammern derart erfolgt, dass die schwingungsanfälligen Decklagen des Hitzeschilds so über das einzubringende gasförmige Medium ausgesteift sind.

Zusätzlich können Aussteifungsrippen auf mindestens einer Seite der Decklagen, die gemäß Ausgestaltung nach der Fig. 1 quer zur Längsachse 4 des Schilds verlaufen, ein- oder angebracht sein. Sofern gemäß der Darstellung nach der Fig. 1 auf der gegenüberliegenden Seite zu der Eintrittsöffnung 21 mindestens eine weitere Öffnung 21 a, vorzugsweise als Gasaustrittsöffnung, angebracht ist, lässt sich im quasi kontinuierlichen Fertigungsbetrieb, wie bereits dargelegt, eine Aufweitung mittels üblicher Druck- oder Pressluft vornehmen, und das dahingehende Aufweitgas lässt sich über die Austrittsöffnungen 21 a abziehen, während parallel das eigentliche Füllmedium, vorzugsweise in Form eines Gases mit geringer Wärmeleitfähigkeit, über die Eintrittsöffnung 21 zugeführt wird. Anschließend werden die Öffnungen 21, 21a durch ein übliches Formgebungsverfahren verschlossen, sei es in Form eines Bördelvorganges, sei es in Form eines Fließpressvorganges oder dergleichen mehr. Die derart gebildeten halbschalenförmigen Schließstellen bieten dann gute Anlageflächen für das spätere Festlegen des Hitzeschilds im Motorraum, beispielsweise mittels einschlägiger Festlegeklemmen oder dergleichen. Anstelle der gezeigten Öffnungen könnte man auch im Bereich der Ober- und der Unterseite der Decklagen entsprechende Öffnungen vorsehen (nicht dargestellt), die man dann mit gängigen Stopfen oder Dichtschrauben verschließen könnte.

Sofern man den Hohlraum 7 mit Füllgasen versieht, wie Kohlenstoffdioxid oder Stickstoff, wäre insoweit in dem Hitzeschild eine Art Löschmittel oder Brandhemmmittel integriert, und im Fall eines Brandes im Motorraum mit Versagen des Hitzeschilds unter Hitzeeinwirkung wäre insoweit zumindest partiell eine Löschhilfe realisiert. Letztere würde auch insbesondere für den Fall gelten, wenn man anstelle eines gasförmigen Mediums eine Flüssigkeit oder eine gelförmige Masse, gegebenenfalls zusammen mit Komponenten eines Gases als Aufweitmittel, in den Hohlraum 7 einbringen würde. Dahingehende löschfähige Medien sind bildbar aus den folgenden Stoffgruppen:
- Ammonium Phosphat (AP)
- Ammonium Polyphosphate (APP)
- Aluminium Trihydroxid (ATH)
- Magnesium Hydroxid (MDH)
- Resorcinol bis-Diphenylphosphat (PDP)
- Roter Phosphor (RP)
- Tri-n-butyl Phosphat (TBP)
- Tricresyl Phosphat (TCP)
- Triphenyl Phosphat (TPP)
- Melamin.

Als Trägerschicht für die dahingehenden Stoffgruppen können auch Nano-partikel wie Bleisilikate oder Graphitverbindungen eingesetzt werden. Bei der Auswahl der Stoffgruppen ist wiederum auf geringe Wärmeleitfähigkeitswerte zu achten.

Eine andere Möglichkeit der Realisierung des schalldämmenden Hitzeschilds besteht darin, den Druck des einzubringenden Mediums vom Umgebungsdruck derart abweichen zu lassen, dass im Hohlraum 7 ein Unterdruck erzeugt wird. Ein dahingehender Unterdruck läßt sich beispielsweise über eine anzuschließende Vakuumeinrichtung im Inneren des schalldämmenden Hitzeschilds erzeugen. Durch den angesprochenen Unterdruck werden die jeweiligen Decklagen des schalldämmenden Hitzeschilds aufeinander zu bewegt, indem diese in Richtung des Inneren des Hohlraumes 7 einbeulen, vorzugsweise von der Umgebung ausgehend in konvexer Schalenform vorliegen, wohingegen im Falle des Überdruckes die jeweiligen Decklagen des schalldämmenden Hitzeschilds als Schirmlagen 1, 3, von der Umgebung aus gesehen, in konkaver Form voneinander weg nach außen vorstehen. Vorzugsweise wird jedoch das Aufbringen des Über- oder Unterdruckes so vorgenommen, dass man an dem fertigen schalldämmenden Hitzeschild keine Änderung im Sinne des vorbeschriebenen konkaven Ausbeulens oder konvexen Einbeulens erkennt, beispielsweise indem man die Decklagen vor der Über- oder Unterdruckerzeugung mit einem vorgebbaren schalenförmigen Überstand konvexer oder konkaver Prägung versieht, die dann durch die angesprochene Druckänderung derart ausgeglichen wird, dass die Schirmlagen 1, 3 parallele Ebenen zueinander ausbilden, ohne erkennbaren Überstand.

Ist das schalldämmende Hitzeschild mit mehr als zwei Decklagen ausgestattet und besteht beispielsweise aus drei Schirmlagen die zwischen sich zwei Aufnahmekammern (nicht dargestellt) begrenzen, gelten die Ausführungen insoweit wiederum bevorzugt für die genannten Decklagen, die nach außen hin das schalldämmende Hitzeschild abschließen und nicht für die mittlere Decklage, die insoweit als Kammertrennung unberührt bleiben kann. Bei einem dahingehenden Mehrkammeraufbau können in den einzelnen Kammern auch unterschiedliche Druckverhältnisse gegenüber dem Umgebungsdruck eingestellt werden, beispielsweise in einer Kammer ein Überdruck herrschen, wohingegen in der anderen Kammer ein Unterdruck herrscht; je nachdem wie man in Abhängigkeit des Aussteifungszweckes eine Aussteifung der Begrenzungswände des schalldämmenden Hitzeschilds in Form der einzelnen Schirmlagen wünscht. Insoweit ließe sich dann auch in einer Kammer als Fluid ein gasförmiges Medium einbringen und in der anderen Kammer ein flüssiges oder gelförmiges Medium bevorraten. Bei noch größerer Kammerzahl ergeben sich insoweit noch weitere Gestaltungsmöglichkeiten.

## Patentansprüche

1. Verfahren zum Abstimmen eines schalldämmenden Hitzeschildes auf eine wärme- und schallabgebende Komponente eines Kraftfahrzeuges, wobei das Hitzeschild mindestens zwei Schirmlagen (1, 3) aufweist, die zwischen sich einen Hohlraum (7) begrenzen, der nach außen zur Umgebung hin mediendicht abgeschlossen wird, der Hohlraum (7) mit mindestens einem Fluid-Medium, befüllt wird, wobei der Fluid-Mediendruck eine definierte Druckdifferenz bildend vom Umgebungsdruck abweicht, wobei eine durch die Druckdifferenz erzeugte Spannung der Schirmlagen (1, 3) derart gewählt wird, dass eine Schwingungs-Eigenfrequenz der Schirmlagen (1, 3) außerhalb eines Resonanzbereiches einer Schallfrequenz der wärme- und schallabgebenden Komponente gelegen ist.

2. Verfahren nach Anspruch 1, **dadurch gekennzeichnet, dass** das Fluid-Medium gasförmig ist.

3. Verfahren nach einem der Ansprüche 1 oder 2, **dadurch gekennzeichnet, dass** der Hohlraum (7) mit dem jeweiligen Fluid-Medium gefüllt wird, das gegenüber der Umgebung einen Überdruck aufweist.

4. Verfahren nach einem der vorangegangenen Ansprüche, **dadurch gekennzeichnet, dass** der Hohlraum (7) in voneinander abgetrennte Teilkammern unterteilt ist.

5. Verfahren nach einem der vorangegangenen Ansprüche, dadurch gekenntzeichnet, dass eine äußere Schirmlage (1) Verstärkungsrippen aufweist.

6. Verfahren nach einem der Ansprüche 1 bis 5, **dadurch gekennzeichnet, dass** als gasförmiges Medium Argon, Kohlenstoffdioxid, Stickstoff oder Luft vorgesehen ist.

7. Verfahren nach einem der Ansprüche 1 bis 6 wobei bei dem schalldämmenden Hitzeschild für eine wärme- und schallabgebende Komponente eines Kraftfahrzeuges die Schirmlagen (1 , 3) nach einer Formgebung aneinander gelegt und entlang ihrer Seitenränder (5, 9, 11, 13) unter Freilassen einer Gaseintrittsöffnung (21) gasdicht miteinander verbunden werden, dass dann durch Einbringen eines Druckmediums über die Gaseintrittsöffnung (21) ein Aufweiten des Hohlraumes (7) bewirkender innerer Überdruck erzeugt wird und dass nach dem Einbringen eines eine geringe Wärmeleitfähigkeit und eine Druckdifferenz gegenüber der Umgebung aufweisenden Gases dieses durch Verschließen der Gaseintrittsöffnung (21) im Hohlraum (7) eingeschlossen wird, wobei eine durch die Druckdifferenz erzeugte Spannung der Schirmlagen (1, 3) so gewählt wird, dass eine Schwingungseigenfrequenz der Schirmlagen (1, 3) außerhalb eines Resonanzbereichs einer Schallfrequenz der wärme- und schallabgebenden Komponente gelegen ist.

8. Verfahren nach Anspruch 7, **dadurch gekennzeichnet, dass** die Schirmlagen (1, 3) entlang ihrer Seitenränder (5, 9, 11, 13) mittels Schweißens oder Pressens verbunden werden.

9. Verfahren nach Anspruch 8, **dadurch gekennzeichnet, dass** die Schirmlagen (1, 3) an den Seitenrändern für den Erhalt einer nahtlosen Übergangsstelle (15) bis zu ihrer Fließgrenze umgeformt werden.

10. Verfahren nach Anspruch 9, **dadurch gekennzeichnet, dass** die nahtlose Übergangsstelle (15) der Schirmlagen (1 ,3) durch Warmumformung erzeugt wird.

11. Verfahren nach einem der Ansprüche 7 bis 10, **dadurch gekennzeichnet, dass** das Aufweiten des Hohlraumes (7) mittels Druckluft und vor dem Befüllen des Hohlraumes (7) mit dem anderen zum Aufbau der definierten Druckdifferenz vorgesehenen Fluid-Medium vorgenommen wird.

12. Verfahren nach einem der Ansprüche 7 bis 11, **dadurch gekennzeichnet, dass** das Aufweiten des Hohlraumes (7) und das Befüllen mit dem zum Aufbau der definierten Druckdifferenz vorgesehenen Fluid-Medium mittels ein und desselben, unter Druck stehenden Gases durchgeführt werden.

## Claims

1. A method for tuning a sound-damping heat shield to a heat and sound-emitting component of a motor vehicle; the heat shield has at least two shielding layers (1, 3), which define a cavity (7) between them, which is closed to the outside in a media-tight fashion relative to the surroundings and the cavity (7) is filled with at least one fluid medium; the fluid medium pressure differs from the ambient pressure, thus constituting a definite pressure difference; a strain on the shielding layers (1, 3) produced by the pressure difference is selected in such a way that an oscillation resonance frequency of the shielding layers (1, 3) lies outside a resonance range of a sound frequency of the heat and sound-emitting component.

2. The method according to claim 1, **characterized in that** the fluid medium is in gaseous form.

3. The method according to one of claims 1 or 2, **characterized in that** the cavity (7) is filled with the respective fluid medium, which has an excess pressure relative to the surroundings.

4. The method according to one of the preceding claims, **characterized in that** the cavity (7) is subdivided into sub-chambers that are separate from one another.

5. The method according to one of the preceding claims, **characterized in that** an outer shielding layer (1) is equipped with reinforcing ribs.

6. The method according to one of claims 1 through 5, **characterized in that** argon, carbon dioxide, nitrogen, or air is provided as the gaseous medium.

7. The method according to one of claims 1 through 6, wherein in the sound-damping heat shield for a heat and sound-emitting component of a motor vehicle, the shielding layers (1, 3) are placed against each other after a forming procedure and are attached to one another in a gas-tight fashion along their lateral edges (5, 9, 11, 13), leaving open a gas inlet opening (21); then by introducing a pressure medium through the gas inlet opening (21), an inner pressure is produced, which produces an expansion of the cavity (7); and after the introduction of a gas that has a low thermal conduction capacity and a pressure difference relative to the surroundings, this gas is encapsulated in the cavity (7) by closing the gas inlet opening (21); a strain on the shielding layers (1, 3) produced by the pressure difference is selected in such a way that an oscillation resonance frequency of the shielding layers (1, 3) lies outside a resonance range of a sound frequency of the heat and sound-emitting component.

8. The method according to claim 7, **characterized in that** the shielding layers (1, 3) are attached along their lateral edges (5, 9, 11, 13) by means of welding or pressing.

9. The method according to claim 8, **characterized in that** the shielding layers (1, 3) are formed until they reach their yield point at the lateral edges in order to achieve a seamless interface (15).

10. The method according to claim 9, **characterized in that** the seamless interface (15) of the shielding layers (1, 3) is produced by means of hot-forming.

11. The method according to one of claims 7 through 10, **characterized in that** the expansion of the cavity (7) is carried out by means of compressed air and before the cavity (7) is filled with the other fluid medium provided for building up the defined pressure difference.

12. The method according to one of claims 7 through 11, **characterized in that** the expansion of the cavity (7) and the filling with the fluid medium provided for building up the defined pressure difference are carried out by means of one and the same pressurized gas.

## Revendications

1. Procédé d'adaptation d'un bouclier thermique insonorisant pour l'adapter à un composant émetteur de chaleur et de bruit d'un véhicule automobile, le bouclier thermique comprenant au moins deux couches de blindage (1, 3) qui délimitent entre elles une cavité (7) qui est refermée de façon étanche aux fluides par rapport à l'extérieur vers les environs, la cavité (7) étant remplie d'au moins un fluide, la pression du fluide s'écartant de la pression ambiante en établissant une différence de pression définie, une contrainte des couches de blindage (1, 3) générée par la différence de pression étant choisie de telle sorte qu'une fréquence de vibration propre des couches de blindage (1, 3) se situe à l'extérieur d'une plage de résonance d'une fréquence acoustique du composant émetteur de chaleur et de bruit.

2. Procédé selon la revendication 1, **caractérisé en ce que** le fluide est gazeux.

3. Procédé selon l'une des revendications 1 ou 2, **caractérisé en ce que** la cavité (7) est remplie du fluide respectif qui présente une surpression par rapport aux environs.

4. Procédé selon l'une des revendications précédentes, **caractérisé en ce que** la cavité (7) est subdivisée en chambres partielles séparées entre elles.

5. Procédé selon l'une des revendications précédentes, **caractérisé en ce qu'**une couche de blindage (1) extérieure comprend des nervures de renforcement.

6. Procédé selon l'une des revendications 1 à 5, **caractérisé en ce qu'**il est prévu à titre de fluide gazeux de l'argon, du dioxyde de carbone, de l'azote ou de l'air.

7. Procédé selon l'une des revendications 1 à 6, dans lequel, pour le bouclier thermique insonorisant destiné à un composant émetteur de chaleur et de bruit d'un véhicule automobile, les couches de blindage (1, 3) sont posées l'une contre l'autre, après avoir été mises en forme, et reliées l'une à l'autre de façon étanche aux gaz le long de leurs bords latéraux (5, 9, 11, 13) en laissant une ouverture d'entrée de gaz (21), puis, par introduction d'un fluide sous pression via l'ouverture d'entrée de gaz (21), une surpression intérieure est générée qui provoque un évasement de la cavité (7), et, après l'introduction d'un gaz présentant une faible conductivité thermique et une différence de pression par rapport aux environs, celui-ci est enfermé dans la cavité (7) par fermeture de l'ouverture d'entrée de gaz (21), une contrainte des couches de blindage (1, 3) générée par la différence de pression étant choisie de telle sorte qu'une fréquence de vibration propre des couches de blindage (1, 3) se situe à l'extérieur d'une plage de résonance d'une fréquence acoustique du composant émetteur de chaleur et de bruit.

8. Procédé selon la revendication 7, **caractérisé en ce que** les couches de blindage (1, 3) sont reliées le long de leurs bords latéraux (5, 9, 11, 13) par soudage ou par compression.

9. Procédé selon la revendication 8, **caractérisé en ce que** les couches de blindage (1, 3) sont déformées sur les bords latéraux jusqu'à leur limite d'élasticité, en vue d'obtenir un emplacement de transition (15) sans soudure.

10. Procédé selon la revendication 9, **caractérisé en ce que** l'emplacement de transition (15) sans soudure des couches de blindage (1, 3) est réalisé par formage à chaud.

11. Procédé selon l'une des revendications 7 à 10, **caractérisé en ce que** l'évasement de la cavité (7) se fait par de l'air comprimé et avant de remplir la cavité (7) de l'autre fluide prévu pour établir la différence de pression définie.

12. Procédé selon l'une des revendications 7 à 11, **caractérisé en ce que** l'évasement de la cavité (7) et le remplissage du fluide prévu pour établir la différence de pression définie se font par l'intermédiaire d'un seul et même gaz sous pression.
